# EUROPÄISCHE PATENTANMELDUNG

(11) **EP 2 226 511 A2**
(43) Veröffentlichungstag der Anmeldung: **08.09.2010**
(21) Anmeldenummer: 10006371.8
(22) Anmeldetag: 12.10.2004
(51) Int. Cl.: F04D 29/68, F01D 5/14, F04D 27/02

(54) **Strömungsarbeitsmaschine mit Fluidzufuhr**

(30) Priorität: 26.11.2003 DE 10355241
(62) Teilanmeldung aus: 04024292.7
(71) Anmelder: Rolls-Royce Deutschland Ltd & Co KG, 15827 Blankenfelde-Mahlow (DE)
(72) Erfinder: Gümmer, Volker, Dr., 15831 Mahlow (DE)
(74) Vertreter: Weber, Joachim

(57) **Zusammenfassung**

Die Erfindung bezieht sich auf eine Strömungsarbeitsmaschine mit zumindest einem Rotor 6, der mehrere an einer rotierenden Welle befestigte Rotorschaufeln 8 umfasst, sowie mit einem einen Ringkanal bildenden Gehäuse 1, welches unter Durchströmung des Rotors 6 und/oder eines Stators 9 von einem Fluid durchströmt wird, wobei Mittel zur Zufuhr von Fluid an mindestens einer Schaufel 8 einer Schaufelreihe des Rotors 6 und/oder des Stators 9 an aerodynamisch kritischen Orten auf der Saugseite vorgesehen sind, wobei sich die Anordnung der Mittel zur Fluidzufuhr an Meridianstromlinien orientiert, die aus einer zwischen der Nabe und dem Gehäuse äquidistanten Teilung der Ringkanalmittelorthogonalen hervorgehen, wobei jede Ringkanalmittelorthogonale durch eine Senkrechte auf der mittleren Meridianstromlinie des Ringkanals gegeben ist,
wobei zur gezielten Beeinflussung der dreidimensionalen Strömung die Mittel zur Fluidzufuhr nicht punktuell, sondern entlang einer Meridianstromlinie in einem Bereich S verteilt angelegt sind, wobei der Bereich S auf einer Meridianstromlinie ein Maximum Sx annimmt, wobei der Bereich S in meridianstromlinienorthogonaler Richtung zu wenigstens einer der Ringkanalwände (Nabe 11 oder Gehäuse 1) hin stufenweise oder kontinuierlich abnimmt und eine variable Intensität der Fluidzufuhr entlang der Schaufelhöhe zwischen Nabe und Gehäuse ermöglicht ist.

## Beschreibung

Die vorliegende Erfindung bezieht sich auf Strömungsarbeitsmaschinen wie etwa Bläser, Verdichter, Pumpen und Ventilatoren, sowohl in axialer, halbaxialer als auch in radialer Bauart. Das Arbeitsmedium oder Fluid kann gasförmig oder flüssig sein.

Im Einzelnen betrifft die Erfindung eine Strömungsarbeitsmaschine mit zumindest einem Rotor, wobei der Rotor mehrere an einer rotierenden Welle befestigte Rotorschaufeln umfasst. Es kann mindestens ein Stator existieren, wobei der Stator mit feststehenden Statorschaufeln versehen ist. Es kann ein Gehäuse existieren, welches die Durchströmung des Rotors und des Stators mit einem Fluid nach außen begrenzt.

Die aerodynamische Belastbarkeit und die Effizienz von Strömungsarbeitsmaschinen, beispielsweise Bläsern, Verdichtern, Pumpen und Ventilatoren, wird durch das Wachstum und die Ablösung von Grenzschichten auf den Schaufeln sowie auf den Naben-und Gehäusewänden begrenzt. Der Stand der Technik hält für dieses fundamentale Problem nur bedingt Lösungen bereit. Es existieren zahlreiche Konzepte zur Fluidzufuhr an Turbinenschaufeln, doch sind diese nicht auf Strömungsarbeitsmaschinen übertragbar, da sie im Wesentlichen der Oberflächenkühlung und nicht der Grenzschichtenergetisierung dienen. Aus Verdichtergitterexperimenten sind Konzepte bekannt, bei denen aus einer druckbeaufschlagten Kammer im Schaufelinnern Luft auf die Schaufelsaugseite ausgeblasen wird, um die zweidimensional beschaffene Profilgrenzschicht zu energetisieren. Verwandte Alternativlösungen sehen ein direktes Durchtreten des Fluides von der Schaufeldruckseite zur Schaufelsaugseite vor. Daneben existiert für Rotoren ein Konzept zur Luftzufuhr an Nabe und Gehäuse durch achsensymmetrisch angeordnete Schlitze, um die dortigen Wandgrenzschichten zu beeinflussen. Schließlich gibt es Veröffentlichungen von Forschungsinstitutionen, die Konzepte aufzeigen, bei denen Rotoren in Gehäusenähe aus einzelnen Düsen angeblasen werden, um die dortige Radialspaltströmung günstig zu beeinflussen. Der allgemeine Gedanke der Grenzschichtbeeinflussung durch Einblasung bzw. Fluidzufuhr ist somit im Stand der Technik enthalten, doch sind die bekannten Lösungen trivial und nur bedingt effektiv.

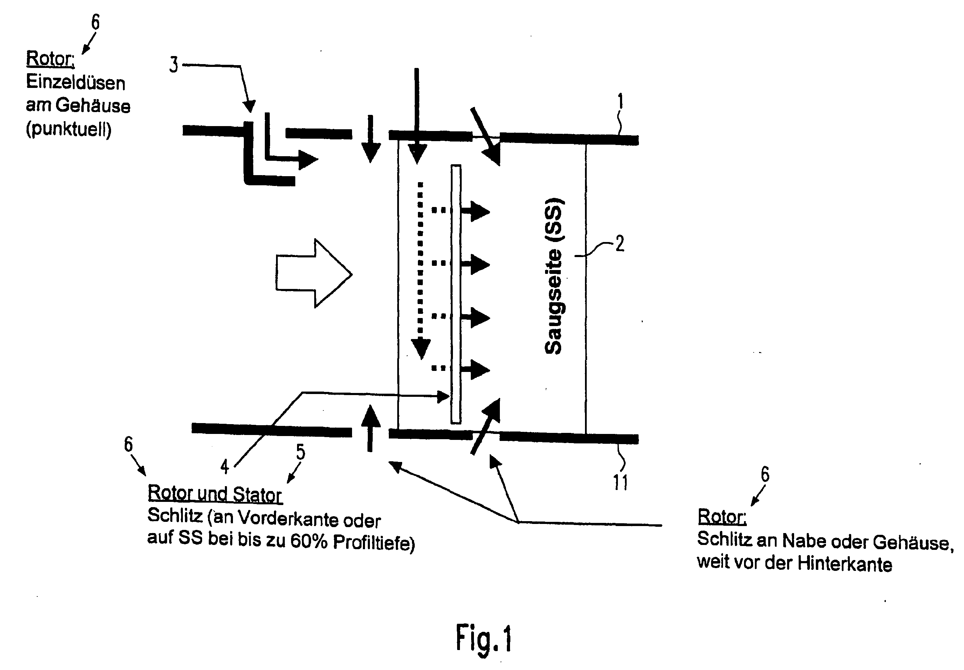

Die Fig.1 zeigt in schematischer Darstellung die aus dem Stand der Technik bekannten Lösungen. Gezeigt sind in schematischer Darstellung eine Nabe 11 und ein Gehäuse 1, zwischen welchen ein Fluid, wie durch den großen Pfeil dargestellt, von links anströmt. Weiterhin ist eine Schaufel 2 dargestellt, die entweder ein Rotor 6 oder Stator 5 sein kann und deren sichtbarer Bereich die Saugseite bildet. Wie durch die Pfeile angedeutet ist, existieren Entwürfe für eine lokale Luftzufuhr an unterschiedlichen Stellen der Strömungsarbeitsmaschine. Für Rotor-und Statorbeschaufelungen sowie ebene Experimentalschaufelgitter ist es bekannt, zwischen der Vorderkante und etwa 60% der Profiltiefe über Schlitze 4 Fluid auf die Schaufelsaugseite einzublasen, um die zweidimensional beschaffene Profilgrenzschicht zu beeinflussen. Das dazu notwendige Fluid tritt dabei aus einem hohlen, druckbeaufschlagten Innenraum der Schaufel 2 in den Hauptströmungspfad ein. Bei alternativen Lösungen ist das Schaufelprofil geteilt, um die Versorgung durch ein direktes Durchtreten des Fluides von der Schaufeldruckseite zur Schaufelsaugseite zu ermöglichen.

Für den Fall eines Rotors ist es bekannt, vor oder innerhalb des Bereichs der vorderen 50% der Profiltiefe durch einen achsensymmetrisch angeordneten Schlitz 3 Fluid an der Nabe 11 und/oder am Gehäuse 1 zuzuführen, um eine Beeinflussung der Wandgrenzschichten zu erreichen. Für Rotoren mit Gehäuseradialspalt existieren zudem Konzepte, die vorsehen, durch eine Anzahl von in den Strömungspfad vorstehenden Düsen 3 am Gehäuse Fluid punktuell einzublasen, um an diskreten Orten des Umfangs auf die Spaltströmung des Rotors Einfluss zu nehmen.

Lediglich eine hier nicht dargestellte Lösung sieht eine Entnahme auf der Schaufelsaugseite und ein Wiedereinströmen an anderer Stelle derselben Schaufel, nämlich der Schaufelspitze vor.

Der Stand der Technik beschreibt somit die folgenden Methoden einer Zufuhr von Fluid:
1.) durch gerade Schlitze im vorderen oder mittleren Bereich der Schaufelsaugseite an Rotoren und Statoren
2.) durch achsensymmetrische, flächenbündige Schlitze in Nabe und/oder Gehäuse weit vor der Schaufelhinterkante an Rotoren mit Gehäuseradialspalt
3.) durch eine Anzahl am Umfang verteilter, vorstehender Einzeldüsen am Gehäuse vor Rotoren mit Gehäuseradialspalt.

Die meisten dieser Konzepte sind nur bedingt auf strömungstechnisch besonders problematische Zonen innerhalb der Schaufelpassage ausgerichtet oder orientieren sich an der einfachen Vorstellung einer zweidimensionalen Profilumströmung ohne die Berücksichtigung der komplizierten dreidimensionalen Strömungsvorgänge im Seitenwandbereich (nahe an Nabe und Gehäuse). Andere sind trotz ihrer Ausrichtung auf lokal kritische Strömungszonen von begrenzter Wirksamkeit.

Üblicherweise wird beim Stand der Technik Hilfsluft höheren Druckes von extern zugeführt. Lediglich ein Patent sieht eine Luftversorgung von Schlitzen einer weiter stromab gelegenen Stelle der Strömungsarbeitsmaschine vor.

Der oben beschriebene Stand der Technik ist schriftlich in nachfolgenden Veröffentlichungen dokumentiert:
US 5,690,473 (Turbine blade having transpiration strip cooling and method of manufacture)
US 6,334,753 (Streamlined bodies with counter-flow fluid injection)
US 2,870,957 (Compressors)
US 2,933,238 (Axial flow compressors incorporating boundary layer control)
US 5,480,284 (Self bleeding rotor blade)

Als nachteilig erweist sich beim Stand der Technik, dass die existierenden Lösungen keine hochwirksamen und insbesondere hinsichtlich des Wirkungsgrades der Strömungsarbeitsmaschine günstigen Lösungen bilden. Vielmehr sind die existierenden Einblasekonzepte vergleichsweise primitiv und sehen entweder die alleinige Einblasung auf der Schaufelsaugseite vor oder kombinieren dies mit einer Einblasung vor oder in der Schaufelreihe durch achsensymmetrische Ringschlitze an Nabe und/oder Gehäuse. Offensichtlich fehlen Konzepte zur gezielten Strömungsbeeinflussung im randnahen Bereich und zur radial (in Schaufelhöhenrichtung) variablen Beeinflussung der Profilgrenzschichten. Eine nicht achsensymmetrische Fluidzufuhr an den Seitenwänden vor oder innerhalb des beschaufelten Region oder auch an Schaufelspitzen im Laufspalt wird nicht in Betracht gezogen, obwohl die Beeinflussung der Seitenwandgrenzschichten am Ort der Problementstehung besonders ratsam ist. Diese gezielte Beeinflussung der dreidimensionalen Strömungsvorgänge im Bereich der Schaufelenden (und des damit verbundenen Strömungsaustausches in Schaufelhöhenrichtung) wird durch existierende Konzepte nicht berücksichtigt.

Der vorliegenden Erfindung liegt die Aufgabe zugrunde, eine Strömungsarbeitsmaschine der eingangs genannten Art zu schaffen, welche unter Vermeidung des Standes der Technik eine sehr wirkungsvolle Grenzschichtbeeinflussung durch gezielte Fluidzufuhr sowie einen hohen Wirkungsgrad aufweist.

Erfindungsgemäß wird die Aufgabe durch die Merkmalskombination des Hauptanspruchs gelöst, die Unteransprüche zeigen weitere vorteilhafte Ausgestaltungen der Erfindung.

Die erfindungsgemäße Strömungsarbeitsmaschine kann eine oder mehrere Stufen mit jeweils einem Rotor und einem Stator umfassen; in Einzelfällen wird die Stufe lediglich durch einen Rotor gebildet.

Erfindungsgemäß besteht der Rotor aus einer Anzahl von Schaufeln, die mit der rotierenden Welle der Strömungsarbeitsmaschine verbunden sind und Energie an das Arbeitsmedium abgeben. Der Rotor kann mit oder ohne Deckband am äußeren Schaufelende ausgeführt sein. Der erfindungsgemäße Stator besteht aus einer Anzahl feststehender Schaufeln, die nabenseitig wie gehäuseseitig mit festem oder freiem Schaufelende ausgeführt sein können.

Die erfindungsgemäß vorgesehene Rotortrommel und die Beschaufelung sind üblicherweise von einem Gehäuse umgeben, in anderen Fällen, z.B. bei Propellern und Schiffsschrauben, existiert kein Gehäuse.

Erfindungsgemäß kann die Strömungsarbeitsmaschine einen Stator vor dem ersten Rotor aufweisen, ein sogenanntes Vorleitrad. Erfindungsgemäß kann mindestens ein Stator oder Vorleitrad abweichend von der unbeweglichen Fixierung auch drehbar gelagert sein, um den Anströmwinkel zu verändern. Eine Verstellung erfolgt beispielsweise durch eine von außerhalb des Ringkanals zugängliche Spindel.

In besonderer Ausgestaltung kann die Strömungsarbeitsmaschine mindestens eine Reihe verstellbarer Rotoren aufweisen.

In einer alternativen Ausgestaltung der erfindungsgemäßen Strömungsarbeitsmaschine kann auch vorgesehen sein, dass diese bei Mehrstufigkeit zwei gegenläufige Wellen besitzt, so dass die Rotorschaufelreihen von Stufe zu Stufe die Drehrichtung wechseln. Hierbei existieren keine Statoren zwischen aufeinander folgenden Rotoren.

Erfindungsgemäß kann die Strömungsarbeitsmaschine alternativ auch eine Nebenstromkonfiguration derart aufweisen, dass sich der einstromige Ringkanal hinter einer bestimmten Schaufelreihe in zwei konzentrische Ringkanäle aufteilt, die ihrerseits mindestens jeweils eine weitere Schaufelreihe umfassen.

Erfindungsgemäß ist somit im Einzelnen eine Strömungsarbeitsmaschine geschaffen worden, die Mittel zur Zufuhr von Fluid an mindestens einer Schaufel einer Schaufelreihe des Rotors und/oder des Stators an aerodynamisch kritischen Orten auf hinterkanten- und randnahen Oberflächen (HRO) umfasst. Dabei sind die erforderlichen Öffnungen an den benetzten Oberflächen der Maschine achsensymmetrisch angeordnet, sofern sie außerhalb der in der Meridianansicht gegebenen Grenzen des beschaufelten Raumes liegen und an von der glatten Ringkanalwand in den Hauptströmungspfad vorstehenden Orten platziert sind. Die erforderlichen Öffnungen sind nicht-achsensymmetrisch angeordnet, sofern sie außerhalb der in der Meridianansicht gegebenen Grenzen des beschaufelten Raumes liegen und bündig mit der glatten Ringkanalwand vorgesehen sind.

Alternativ oder zusätzlich zu Fluidzufuhrvorrichtungen an HRO weist die Strömungsarbeitsmaschine erfindungsgemäß an mindestens einer Schaufel einer Rotor- oder Statorreihe Mittel zur Fluidzufuhr auf, die auf der Schaufelsaugseite in Meridianströmungsrichtung nicht punktuell, sondern über einen definierten Bereich verteilt angelegt sind, und deren Meridianerstreckung in meridianstromlinienorthogonaler Richtung zu wenigstens einer der Ringkanalwände (Nabe oder Gehäuse) hin abnimmt (saugseitige, intensitätsvariable Fluidzufuhr SIFZ).

Im Folgenden wird die Erfindung anhand von Ausführungsbeispielen in Verbindung mit den Figuren beschrieben. Dabei zeigt:
- Fig.1:: eine schematische Darstellung des Standes der Technik
- Fig.2:: eine schematische Darstellung von Varianten des erfindungsgemäßen Grundkonzeptes
- Fig.3:: eine weitere schematische Darstellung von Vari- anten des erfindungsgemäßen Grundkonzeptes
- Fig.4:: verschiedene Varianten und Konfigurationen der erfindungsgemäßen Strömungsarbeitsmaschine
- Fig.5:: eine Darstellung zur erfindungsgemäßen Definiti- on des Begriffs HRO
- Fig.6:: eine Darstellung zur erfindungsgemäßen Definiti- on von HRO, Typen A und B
- Fig.7:: eine Darstellung zur erfindungsgemäßen Definiti- on von HRO, Typen C, D und E
- Fig.8:: eine weitere Darstellung zur erfindungsgemäßen Definition von HRO, Typen C, D und E
- Fig.9 bis 11:: unterschiedliche Ausgestaltungsformen von Kam- mern zur Zuführung des Fluids, vornehmlich vom Gehäuse aus
- Fig.12 bis 14:: Ausgestaltungsvarianten analog Fig.9 bis 11 mit Kammern zur Zuführung des Fluids, vornehmlich von der Nabe aus
- Fig.15 bis 17:: erfindungsgemäße Vorrichtung zur saugseitigen, intensitätsvariablen Fluidzufuhr (SIFZ)

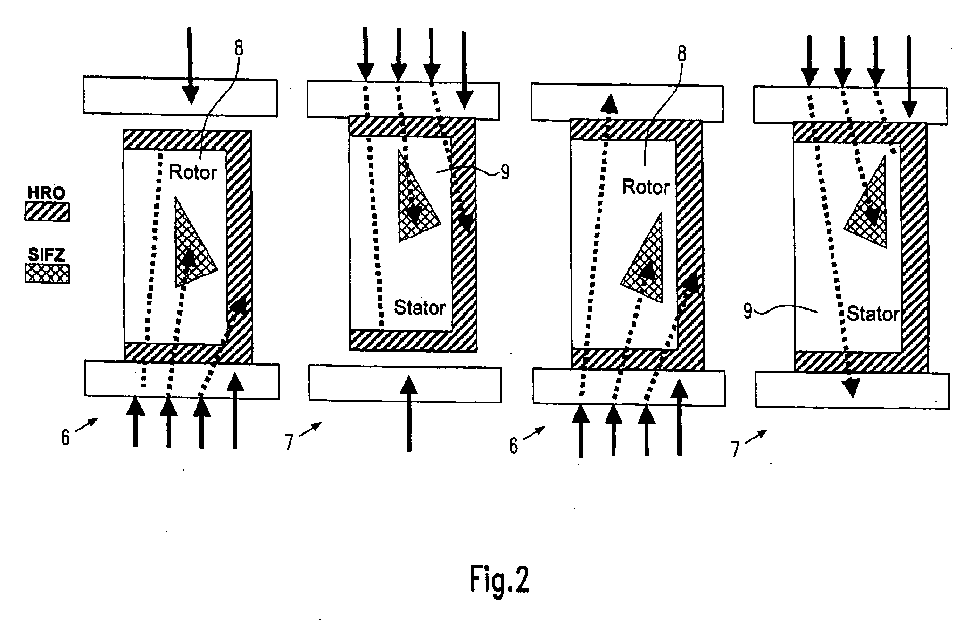

Die Fig. 2 zeigt in stark vereinfachter Darstellung die erfindungsgemäße Lösung an vier unterschiedlich konfigurierten Schaufelreihen, welche jeweils einen Rotor 6 beziehungsweise einen Stator 7 umfassen, die mit Rotorschaufeln 8 beziehungsweise Statorschaufeln 9 versehen sind. Mit dem Bezugszeichen 1 wird in stark vereinfachter Darstellung ein Gehäuse oder ein außenliegendes Deckband wiedergegeben. Das Bezugszeichen 11 kennzeichnet eine Rotortrommel oder ein innenliegendes Deckband. Die gewählte Ansicht der Schaufel kann sowohl die Saugseite als auch die Druckseite der Schaufel repräsentieren. Auf Rotoren und Statoren ist eine Zone für saugseitige intensitätsvariable Fluidzufuhr (SIFZ) vorgesehen.

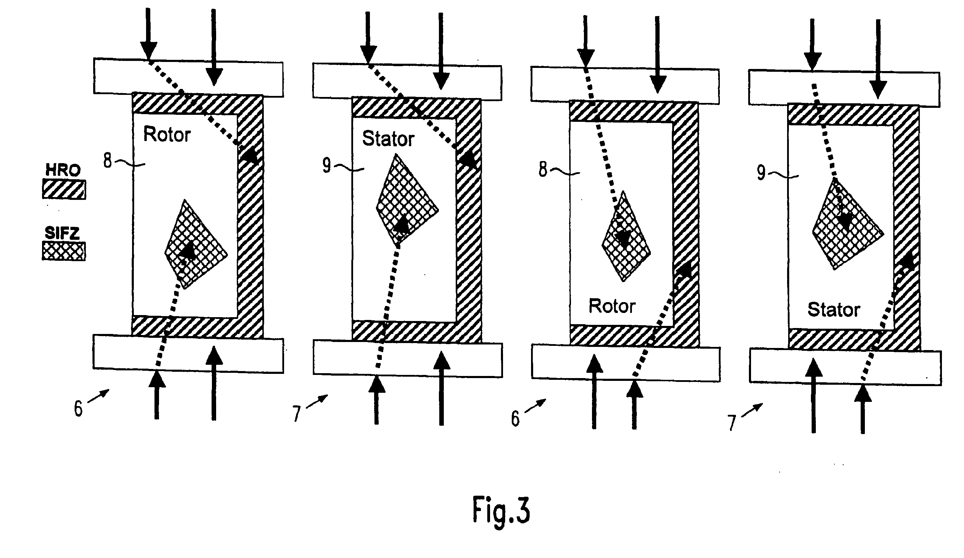

In analoger Weise zeigt Fig. 3 das erfindungsgemäße Grundkonzept.

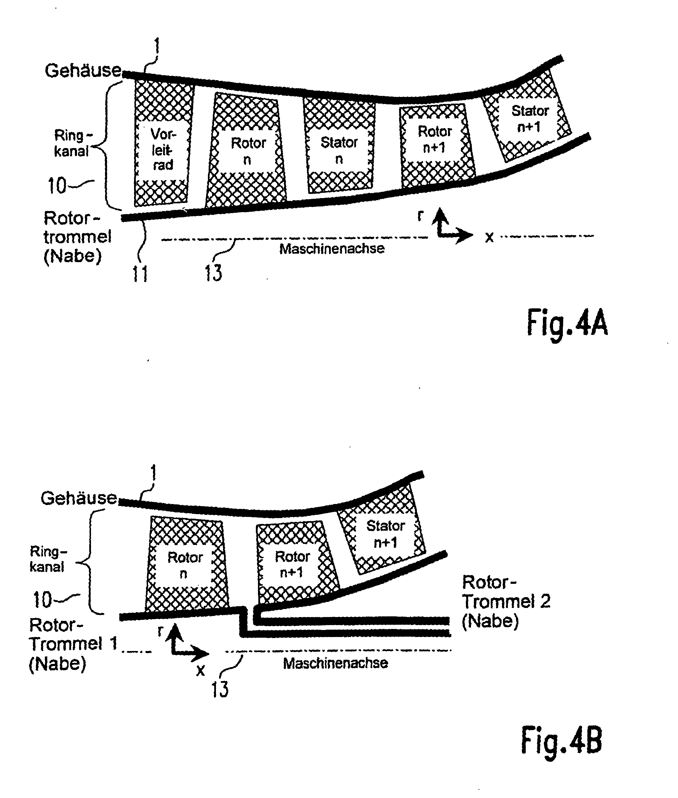

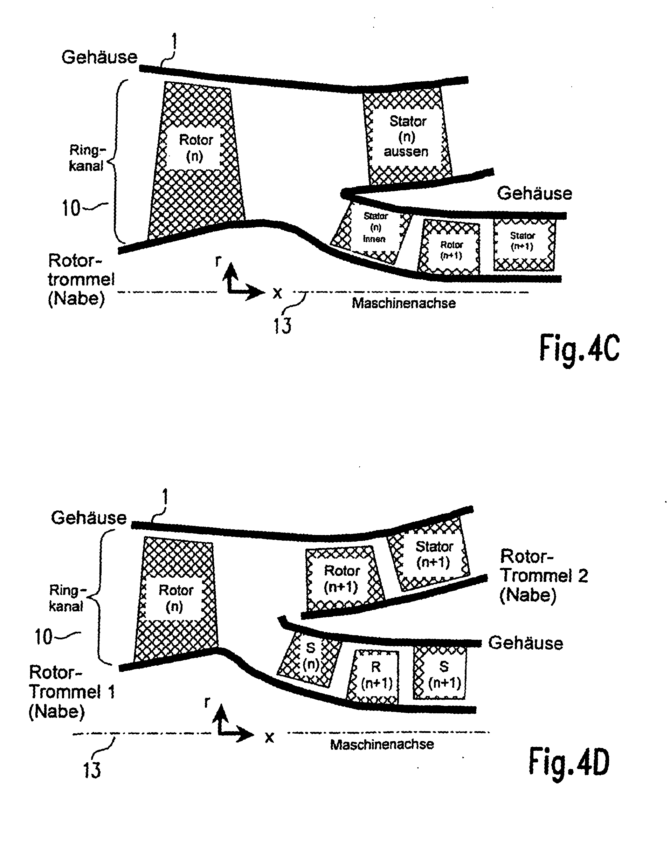

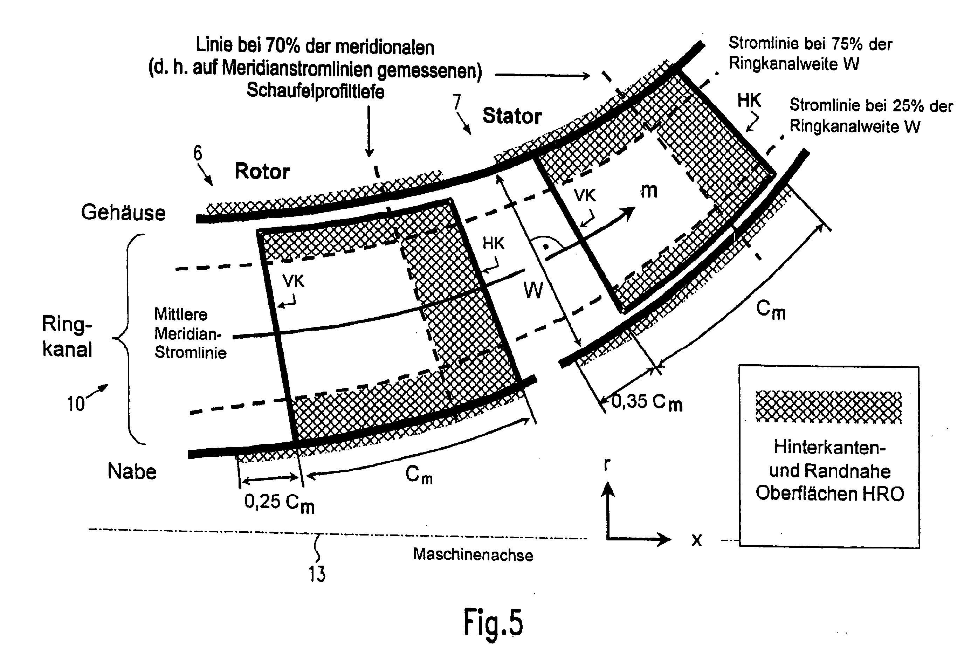

Die Fig. 4 zeigt vier verschiedene Konfigurationen der erfindungsgemäßen Strömungsarbeitsmaschine. Dabei bezeichnet das Bezugszeichen 10 einen von links nach rechts zu durchströmenden Ringkanal, mit dem Bezugszeichen 13 ist die Maschinenachse dargestellt, um welche sich eine Rotortrommel (Nabe) 11 dreht. Bei den in Fig. 5B und 5D gezeigten Ausführungsbeispielen ist eine weitere Rotortrommel (Nabe) vorgesehen. Die Rotoren, Statoren sowie das Vorleitrad sind jeweils in Fig. 5 beschriftet, es ist jeweils in schematischer Weise eine Schaufel dargestellt.

Die Fig. 5 zeigt die Definition der erfindungsgemäßen Hinterkanten- und Randnahen Oberflächen (HRO). Es ist wiederum vereinfacht ein Rotor 6 sowie ein Stator 7 gezeigt, die im Ringkanal 10 zwischen einem Gehäuse 1 und einer Nabe (Rotortrommel) 11 angeordnet sind.

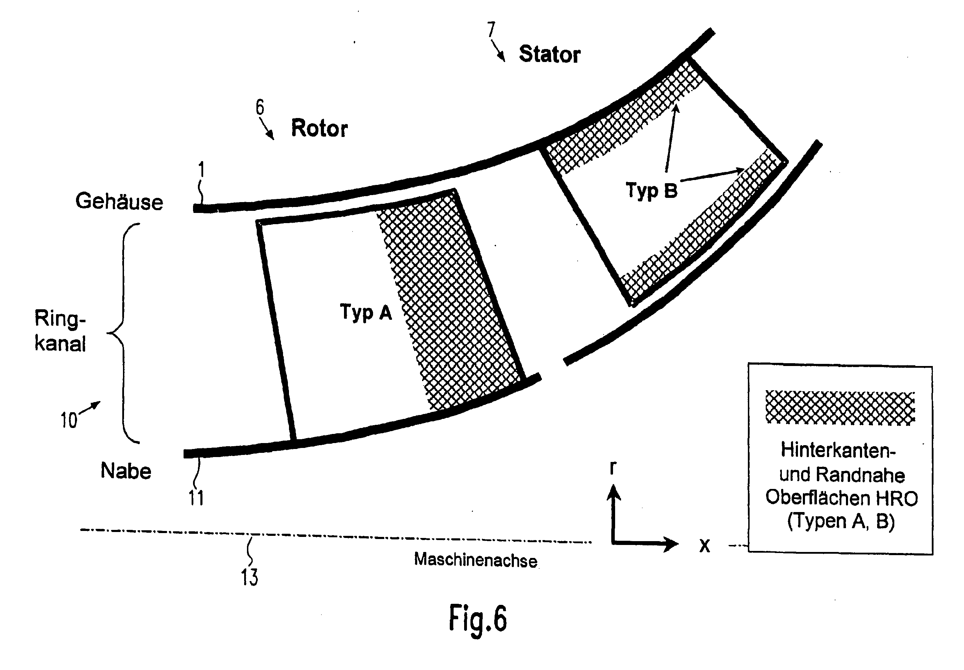

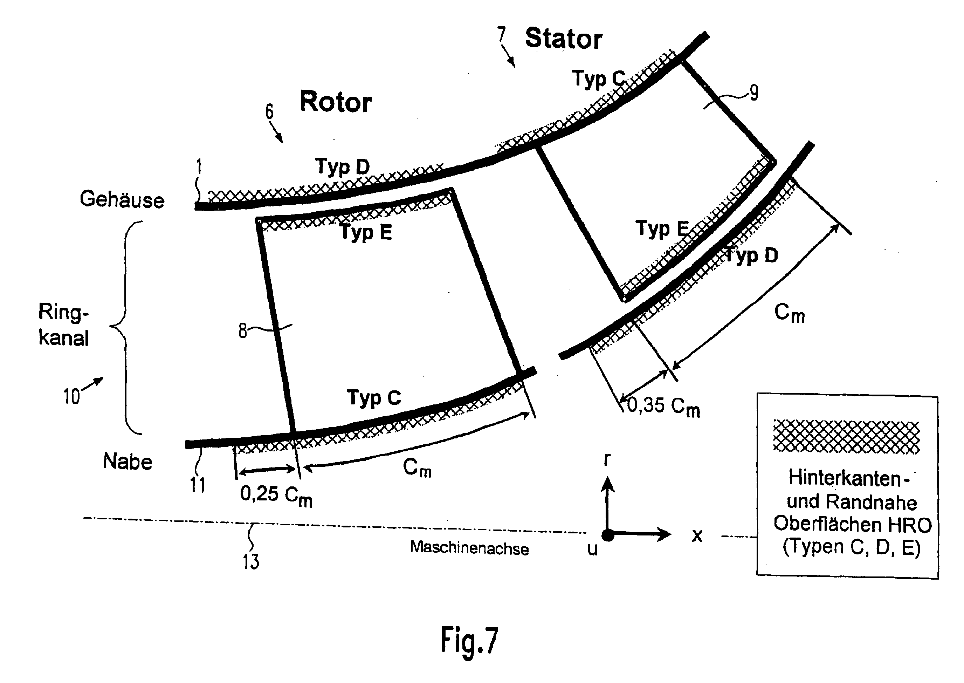

Wie die Darstellungen in Fig. 6 und 7 zeigen, ergeben sich erfindungsgemäß fünf HRO-Typen:
HRO, Typ A: Die Oberflächen sind an der Schaufelsaug- oder Druckseite eines Rotors oder Stators ausgebildet, und zwar zwischen 70% und 100% der meridionalen Schaufelsehnenlänge Cm. O-berflächenabschnitte im zentralen Bereich der Hinterkante, deren Oberflächennormale einen Winkel von weniger als 60 Grad mit der mittleren Abströmrichtung bildet, sind dabei ausgeschlossen.

HRO, Typ B: Die Oberflächen sind an der Schaufelsaugseite, der Schaufeldruckseite, der Vorderkante oder der Hinterkante eines Rotors oder Stators ausgebildet, und zwar an der Nabe zwischen 0% und 25% der lokalen Ringkanalweite W und am Gehäuse zwischen 75% und 100% der lokalen Ringkanalweite W.

HRO, Typ C: Die Oberflächen sind an der Naben- oder Gehäusekontur des Ringkanals mit fester Verbindung zur Schaufel ausgebildet, wie sie im Fall von Plattformen, Deckbändern, Blisk- und Blingkonfigurationen auftreten, und zwar zwischen der Hinterkantenebene HK und einer Ebene, die sich 25% der meridionalen Schaufelsehnenlänge Cm vor der Vorderkante VK befindet.

HRO, Typ D: Die Oberflächen sind an Naben- und Gehäusekontur des Ringkanals 10 im Bereich freier Schaufelenden (oberhalb von Rotoren ohne Deckband oder unterhalb von Statoren ohne Deckband) zwischen der Hinterkantenebene HK und einer Ebene, die sich 35% der meridionalen Schaufelsehnenlänge Cm vor der Vorderkante VK befindet, ausgebildet.

HRO, Typ E: Die Oberflächen sind an Schaufeln an deren freien Schaufelenden ausgebildet, die der Naben- oder der Gehäusekontur des Ringkanals 10 zugewandt sind (Spitzenstirnflächen der Schaufel).

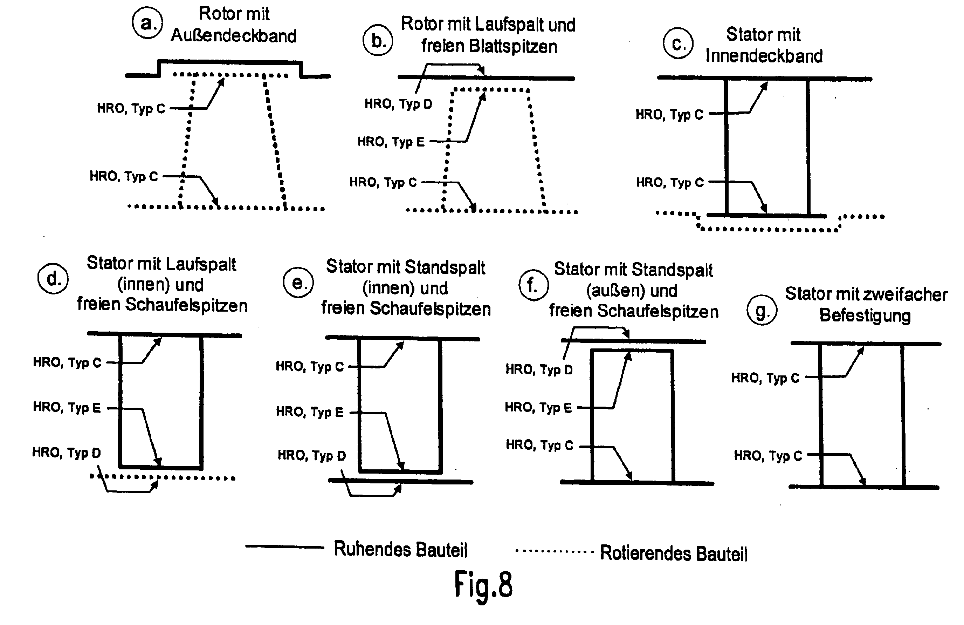

Die Fig. 8 zeigt unterschiedliche Ausführungen von Schaufelreihen der erfindungsgemäßen Strömungsarbeitsmaschine mit einer Kennzeichnung der wiederkehrenden Elemente HRO, Typ C, Typ D, Typ E. Im Einzelnen zeigen dabei die Ausführungsbeispiele Folgendes:
Die Fig. 8a zeigt eine Baugruppe, bestehend aus einer Rotortrommel, mit mehreren mit der Trommel rotierenden Rotorschaufeln, einem die Rotorschaufeln am äußeren Umfang umgebenden und mitrotierenden Deckband sowie einem die rotierenden Teile umgebenden und ruhenden Gehäuse.

Die Fig. 8b zeigt eine Variante mit einer Baugruppe, bestehend aus einer Rotortrommel, mehreren mit der Trommel rotierenden Rotorschaufeln mit freien äußeren Enden, sowie einem die rotierenden Teile umgebenden und ruhenden Gehäuse.

Die Fig. 8c zeigt eine Baugruppe, bestehend aus einem ruhenden Außengehäuse, mehreren mit dem Außengehäuse verbundenen Statorschaufeln, sowie einem von den Statorschaufeln am inneren Umfang getragenes Deckband und einer innerhalb der ruhenden Bauteile rotierenden Rotortrommel.

Die Fig. 8d zeigt eine Baugruppe, bestehend aus einem ruhenden Außengehäuse, mehreren mit dem Außengehäuse verbundenen Statorschaufeln mit freien inneren Enden und einer innerhalb der ruhenden Bauteile rotierenden Rotortrommel.

Aus Fig. 8e ist eine Baugruppe ersichtlich, welche aus einem ruhenden Außengehäuse, mehreren mit dem Außengehäuse verbundenen Statorschaufeln mit freien inneren Enden, und einem innerhalb der Statorschaufelreihe ruhenden Innengehäuse besteht.

Die Fig. 8f zeigt eine Baugruppe, bestehend aus einem ruhenden Innengehäuse, mehreren mit dem Innengehäuse verbundenen Statorschaufeln mit freien äußeren Enden, und einem die Statorschaufelreihe umgebenden Außengehäuse.

Die Fig. 8g verdeutlicht eine Baugruppe, welche aus einem ruhenden Innen- und Außengehäuse besteht, sowie mehreren mit dem Innen- und Außengehäuse verbundenen Statorschaufeln.

Erfindungsgemäß erfolgt die Führung des zuzuführenden Fluids über Strömungswege an der Peripherie des Ringkanals 10 oder innerhalb von Schaufeln 8, 9 und ihrer umgebenden Bauteile. Erfindungsgemäß wird das Fluid dabei entweder bei freier Strömung oder aber mit Hilfe mindestens eines im Strömungsweg befindlichen Drosselorgans 12, das unverstellbar oder auch regelbar sein kann, in den Ringkanal im Bereich der betreffenden Schaufelreihe zugeführt. Die Zuführung des Fluids erfolgt entweder von einer Fremdquelle aus oder wird von Orten der Strömungsarbeitsmaschine oder der die Strömungsarbeitsmaschine einschließenden Gesamtanlage zurückgeführt.

Die notwendigen Elemente des Strömungsweges können erfindungsgemäß als einfacher Hohlraum, als Ringraum, als Rohrleitung, als Kanal, als Düse oder als Diffusor beliebiger Querschnittsform ausgestaltet sein und werden erfindungsgemäß im Folgenden unter dem Begriff "Kammer" zusammengefasst.

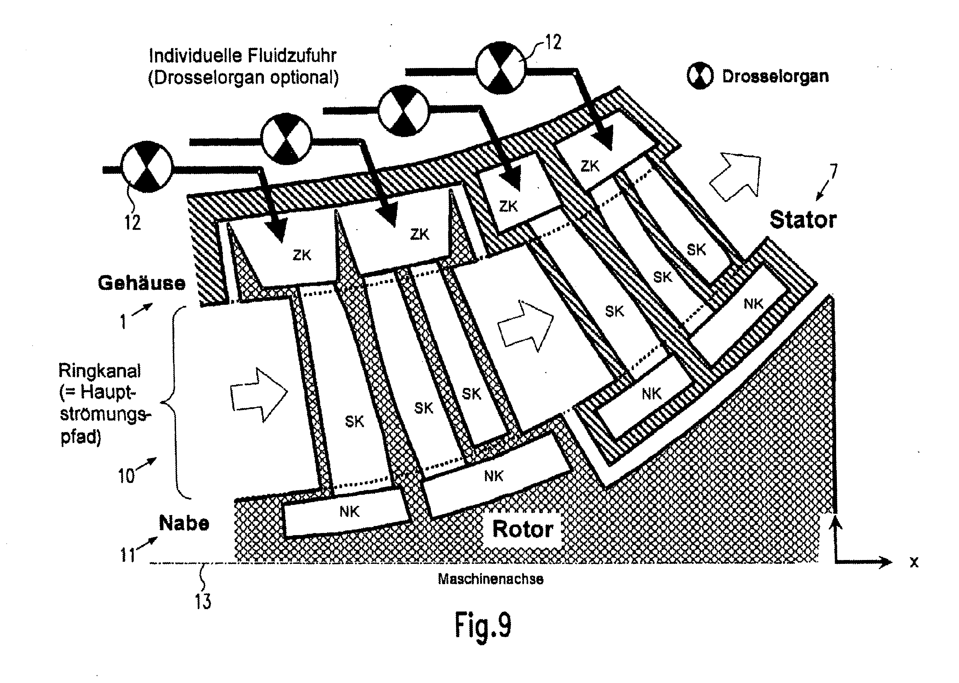

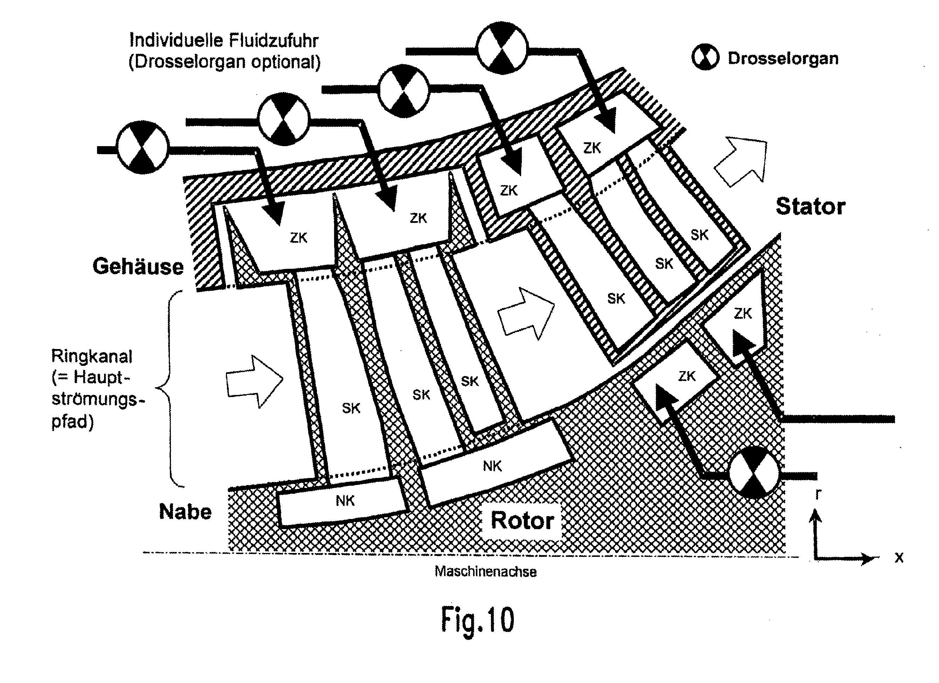

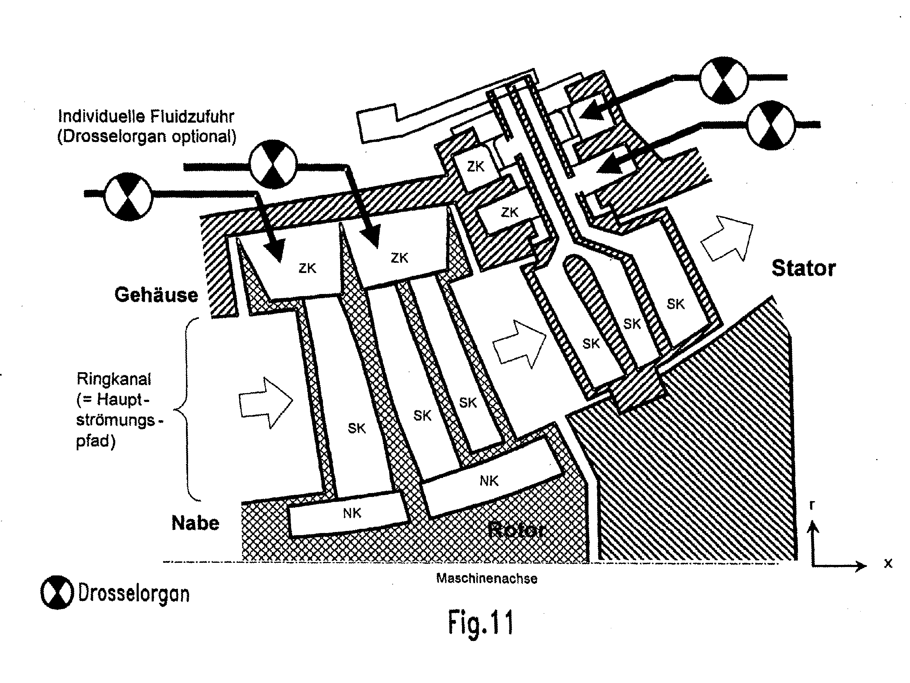

Die Fig. 9 bis 11 zeigen unterschiedliche Ausgestaltungsvarianten der Erfindung mit Konfigurationen, bei welchen Zufuhrkammern (ZK), Schaufelinnenkammern (SK) und Nabenkammern (NK) vorgesehen sind.

Im Einzelnen zeigen die Fig. 9 bis 11 Ausgestaltungsvarianten, bei welchen den einzelnen Schaufelreihen jeweils mindestens eine Kammer am oder im Gehäuse zugeordnet ist, durch die Fluid der Schaufelreihe zugeführt wird (Zufuhrkammer ZK). Für den Fall, dass mindestens eine weitere Kammer im Inneren mindestens einer Schaufel existiert, die sich über die Gesamtheit oder nur Teile der Schaufelhöhe erstreckt (Schaufelinnenkammer SK), kann jede Zufuhrkammer ZK mit mindestens einer Schaufelinnenkammer SK in Verbindung stehen und dieser Fluid zuführen. Besitzt die Schaufel eine feste Anbindung zur inneren Ringkanalkontur, so kann als letztes Kammerglied des zur Fluidzufuhr konzipierten Gesamtströmungsweges mindestens eine Kammer an oder in der Nabe außerhalb des Ringkanals existieren (Nabenkammer NK), die mit mindestens einer Schaufelinnenkammer SK in Verbindung steht und von dieser Fluid entgegen nimmt.

Besitzt die Schaufel ein freies Ende mit Radialspalt an der Nabe, oder weist die Schaufel keine über die gesamte Schaufelhöhe reichende Schaufelinnenkammer auf, kann zur Fluidzufuhr an der Nabe ebenfalls mindestens eine Zufuhrkammer ZK an oder in der Nabe außerhalb des Ringkanals existieren.

Zufuhrkammern und Nabenkammern erstrecken sich über die Gesamtheit oder Teile des Maschinenumfangs. Die Zufuhrkammern ZK dienen der Zuleitung des Fluids zur betreffenden Schaufelreihe, wobei die Schaufelinnenkammern SK Nabenkammern Hilfsmittel sind, um den Zugang zu den relevanten Hinterkanten- und Randnahen Oberflächen (HRO) der betreffenden Schaufelreihe herzustellen.

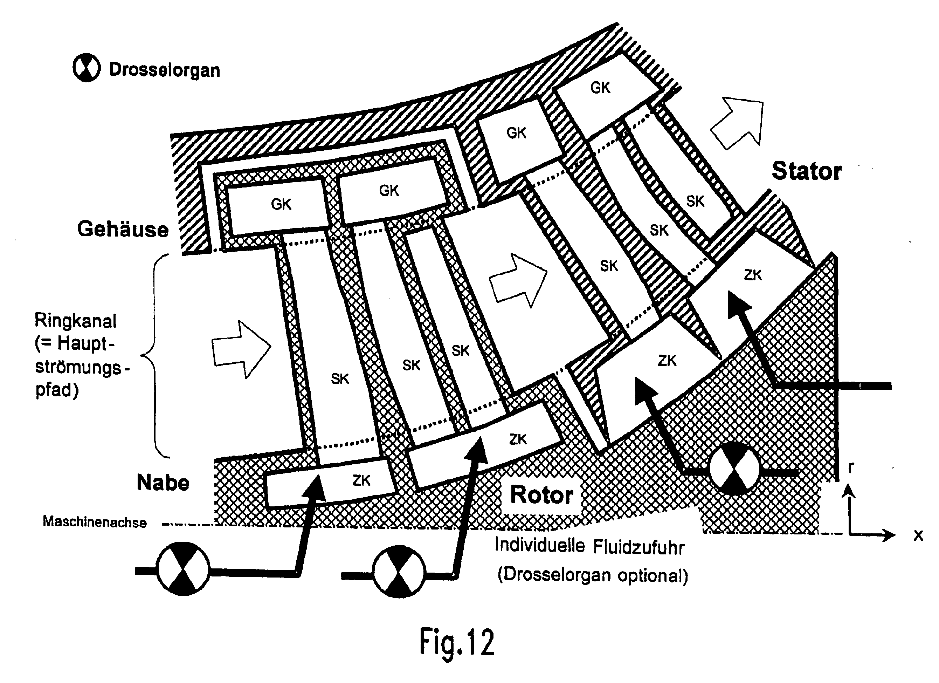

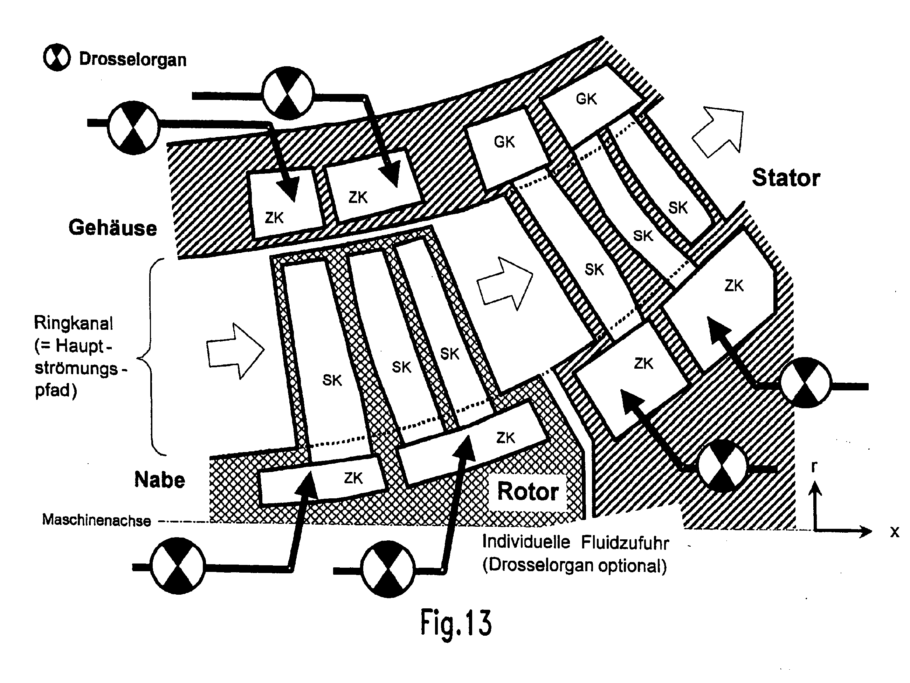

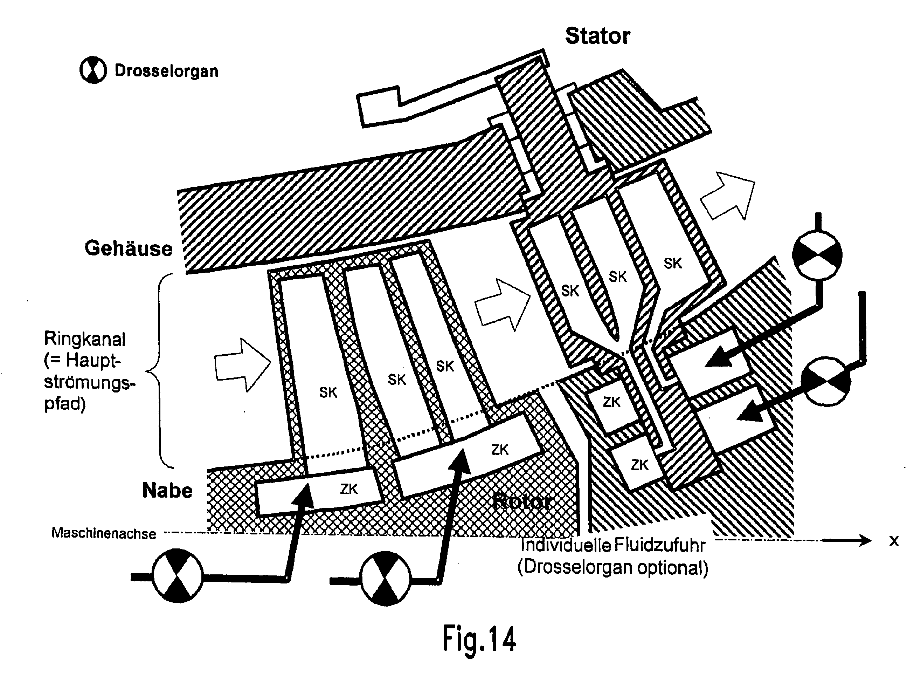

Während in den Fig. 9 bis 11 Ausgestaltungsformen gezeigt wurden, bei welchen mindestens eine Zufuhrkammer ZK am oder im Gehäuse angeordnet ist, zeigen die Fig. 12 bis 14 Ausgestaltungsformen, bei welchen mindestens eine Kammer an oder in der Nabe angeordnet ist, durch die Fluid der Schaufelreihe zugeführt wird (Zufuhrkammer ZK). Für den Fall, dass mindestens eine weitere Kammer im Innern mindestens einer Schaufel existiert, die sich über die Gesamtheit oder nur Teile der Schaufelhöhe erstreckt (Schaufelinnenkammer SK), kann jede Zufuhrkammer ZK mit mindestens einer Schaufelinnenkammer SK in Verbindung stehen und dieser Fluid zuführen. Besitzt die Schaufel eine feste Anbindung zur äußeren Ringkanalkontur, so kann als letztes Kammerglied des zur Fluidzufuhr konzipierten Gesamtströmungsweges mindestens eine Kammer am oder im Gehäuse existieren (Gehäusekammer GK), die mit mindestens einer Schaufelinnenkammer SK in Verbindung steht und von dort Fluid entgegen nimmt.

Besitzt die Schaufel ein freies Ende mit Radialspalt am Gehäuse oder weist die Schaufel keine über die gesamte Schaufelhöhe reichende Schaufelinnenkammer auf, kann zur Fluidzufuhr am Gehäuse ebenfalls mindestens eine Zufuhrkammer am oder im Gehäuse außerhalb des Ringkanals existieren.

Die Zufuhrkammern und Gehäusekammern erstrecken sich über die Gesamtheit oder nur Teile des Umfangs der Strömungsarbeitsmaschine. Die Zufuhrkammern dienen der Zuleitung des Fluids zu der betreffenden Schaufelreihe. Die Schaufelinnenkammern und die Gehäusekammern sind Hilfsmittel, um den Zugang zu relevanten Hinterkanten- und Randnahen Oberflächen (HRO) im Bereich der betreffenden Schaufelreihe herzustellen.

Erfindungsgemäß · ist vorgesehen, dass bei einer Schaufelreihe der im Zusammenhang mit den Fig. 9 bis 11 bzw. 12 bis 14 beschriebenen Ausgestaltungsformen an mindestens einer Hinterkanten- und Randnahen Oberfläche (HRO) an mindestens einer ihrer Schaufeln und/oder mindestens einem ihrer den Ringkanal begrenzenden Bauteile mindestens eine Fluidzufuhrvorrichtung angeordnet ist, die eine Verbindung zwischen der Hinterkanten- und Randnahen Oberflächen (HRO) und einer Zufuhrkammer ZK, einer Schaufelinnenkammer SK, einer Nabenkammer NK oder einer Gehäusekammer GK herstellt. Die konstruktive Ausführung der Fluidzufuhrvorrichtung erfolgt durch mechanische, chemische oder thermische Materialabtragsverfahren an dem die Hinterkanten- und Randnahen Oberfläche (HRO) bildenden Bauteil.

In einer alternativen Ausgestaltung der Erfindung erhält die Fluidzufuhrvorrichtung ihre Begrenzungen durch Kombination mindestens zweier vorbereiteter Einzelbauteile, die lose oder fest zusammengefügt werden.

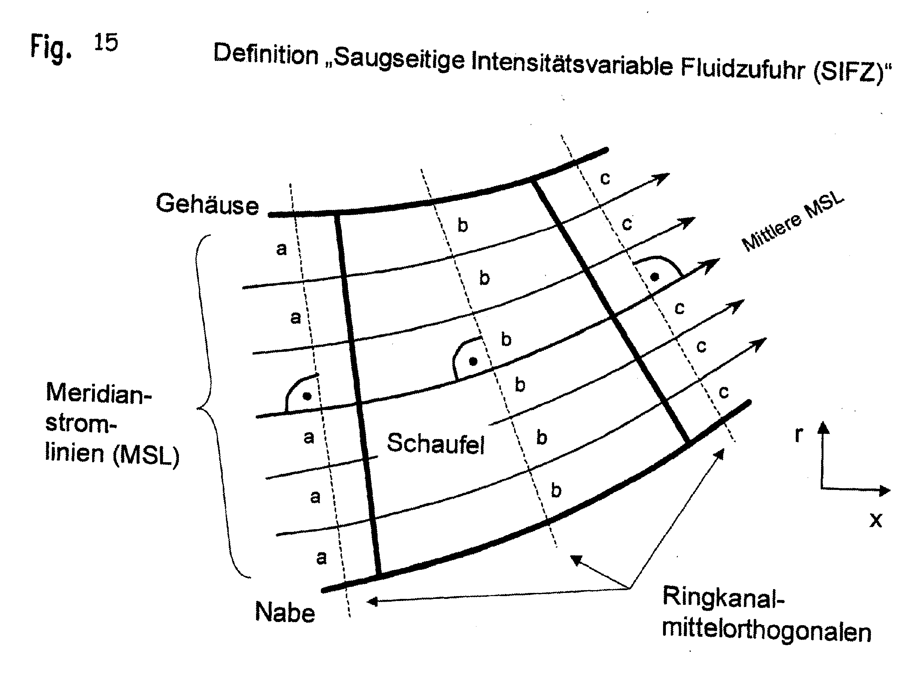

Die Fig. 15 bis 17 zeigen Ausführungsbeispiele der erfindungsgemäßen Vorrichtung zur saugseitigen, intensitätsvariablen Fluidzufuhr (SIFZ) an einer Rotor- oder Statorreihe. Hierbei ist in aerodynamisch kritischen Zonen auf der Schaufelsaugseite eine Formation aus Schlitzen bzw. funktional ähnlichen Ersatzelemente vorgesehen, die eine variable Intensität der Fluidzufuhr in meridianstromlinienorthogonaler Richtung ermöglicht. Die Fluidzufuhr geschieht durch eine Anzahl von Öffnungen, die unterschiedlichen Schaufelinnenkammern zugeordnet sein können.

Wie in Fig. 15 dargestellt ist, gilt im Einzelnen das Folgende:

Eine Schaufelreihe der Strömungsarbeitsmaschine wird in dem aus Axial- und Radialrichtung gebildeten Koordinatensystem (x, r) betrachtet. Die Festlegung der Vorrichtung zur SIFZ orientiert sich an einer Anzahl von Meridianstromlinien, deren Stützstellen aus einer zwischen Nabe und Gehäuse äquidistanten Teilung der Ringkanalmittelorthogonalen hervorgehen. Dies ist in Fig. 41 beispielhaft für je eine Ringkanalmittelorthogonale vor (siehe gleiche Strecken a), innerhalb (siehe gleiche Strecken b) und hinter der Schaufelreihe (siehe gleiche Strecken c) gezeigt.

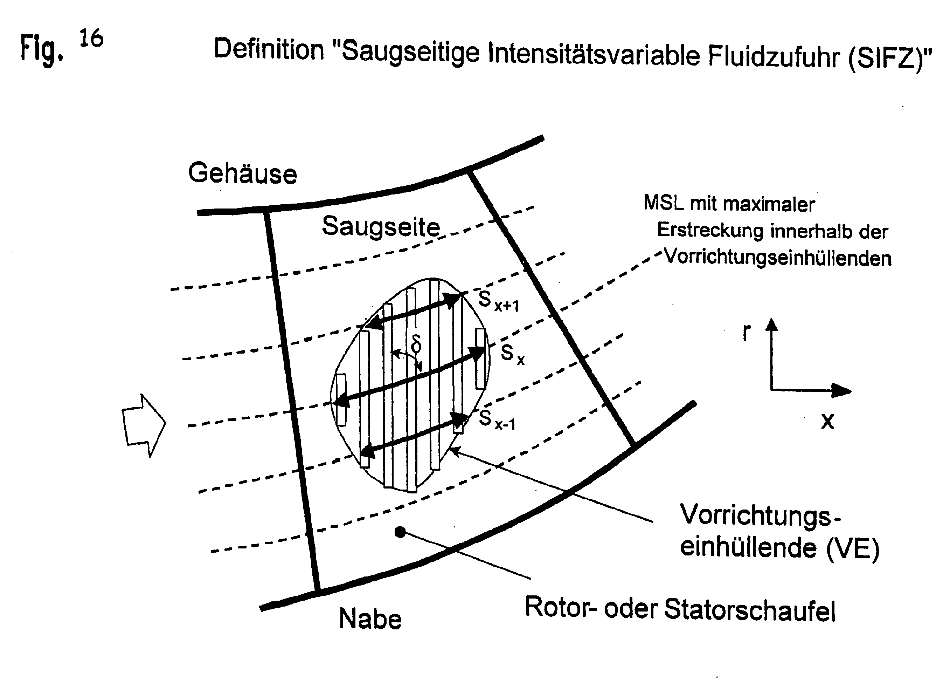

Die Fig. 16 zeigt ein Ausführungsbeispiel der erfindungsgemäßen Vorrichtung zur SIFZ. Die Vorrichtung besteht aus einem Verbund von mindestens zwei Öffnungen (N>=2), die innerhalb eines Teilbereiches der Saugseite mindestens einer Schaufel einer Rotor-oder Statorreihe vorgesehen sind. Die von der Vorrichtung eingenommene Zone der Saugseite wird durch die Einhüllende um alle zum Verbund gehörenden Öffnungen beschrieben (Vorrichtungseinhüllende VE). Die Vorrichtung ist so beschaffen, dass entlang einer bestimmten Meridianstromlinie die maximale Meridianerstreckung S(x) vorliegt.

Erfindungsgemäß ergibt der Übergang zu benachbarten Meridianstromlinien eine in Richtung des Gehäuses und in Richtung der Nabe stufenweise oder kontinuierlich abnehmende Meridianerstreckung. Von Stromlinie zu Stromlinie gilt folglich: S(x) >= S(x+1) >= ... >= S(x+n) bzw. S(x) >= S (x-1) >= ... >= S(x-n). In der gewählten Darstellung besteht die Vorrichtung aus einer Anzahl von geraden, parallelen Schlitzen. Jedoch kann jeder Schlitz einfach oder mehrfach gekrümmt verlaufen, konstante oder in seiner Längsrichtung veränderliche Breite aufweisen, und am Anfangs- und Endpunkt eine eckige Form oder einen runden (langlochähnlichen) Abschluss besitzen. Zwischen Schlitz und Meridianstromlinie kann ein beliebiger Neigungswinkel delta liegen. Die Schlitze führen senkrecht oder schräg unter mindestens 5° zur Saugseitenoberfläche durch das Wandmaterial in eine Schaufelinnenkammer SK.

In einer abgewandelten Form tritt - bei gleichen Regeln hinsichtlich der Anordnung und des Verlaufes an der Saugseitenoberfläche sowie der Beschaffenheit der Oberflächenkanten und Orientierung in der Saugseitenwand - an die Stelle mindestens eines Schlitzes eine ein- oder mehrreihige Formation von Löchern.

In einer anderen abgewandelten Form ist - bei gleichen Regeln hinsichtlich der Anordnung und des Verlaufes an der Saugseitenoberfläche - mindestens ein Schlitz als Flachdüse ausgeformt.

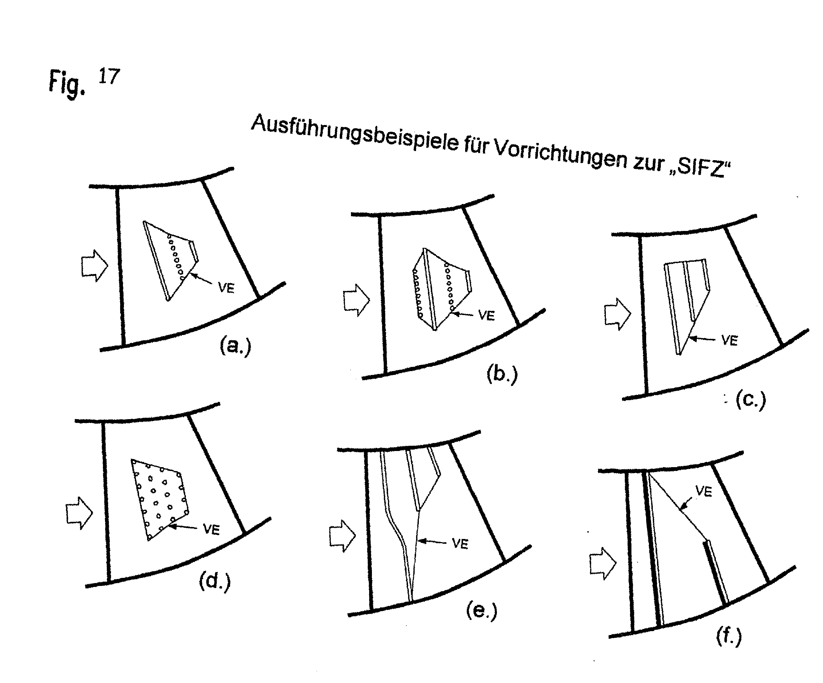

Die Fig. 17 zeigt unterschiedliche Ausführungsvarianten einer Vorrichtung zur SIFZ. Im Einzelnen zeigen dabei die Ausführungsbeispiele Folgendes:
Die Fig. 17a zeigt eine Rotor- oder Statorbaugruppe, die zur Realisierung der erfindungsgemäßen meridianstromlinienorthogonalen Variation der Fluidentnahemintensität auf der Saugseite eine Formation aus 2 Schlitzen und einer Lochreihe aufweist. Die Vorrichtung bedeckt erfindungsgemäß nur einen Teil der Saugseite und ist in diesem Anwendungsbeispiel in deren Zentralbereich angeordnet. Der Verbund aus Schlitzen und Löchern ist durch die Vorrichtungseinhüllende VE umgeben und markiert. Es ist ersichtlich, dass die Meridianerstreckung der Vorrichtung hier sowohl in Richtung des Gehäuses als auch in Richtung der Nabe kontinuierlich abnimmt.

Die Fig. 17b zeigt eine gegenüber Fig. 43a abgewandelte erfindungsgemäße Rotor- oder Statorbaugruppe, bei der die Schlitz-und Lochelemente eine andere Reihenfolge einnehmen und die Anzahl der Elemente erhöht ist.

Die Fig. 17c zeigt eine erfindungsgemäße Rotor- oder Statorbaugruppe, die auf der Saugseite eine Formation aus 3 Schlitzen aufweist. Die Vorrichtung ist in diesem Anwendungsbeispiel primär dem Gehäuse zugewandt. Der Verbund der Öffnungen ist durch die Vorrichtungseinhüllende VE umgeben und markiert. Es ist ersichtlich, dass die Meridianerstreckung der Vorrichtung hier in Richtung des Gehäuses stufenhaft auf null sinkt und in Richtung der Nabe kontinuierlich abnimmt.

Die Fig. 17d zeigt eine Rotor- oder Statorbaugruppe, die auf der Saugseite eine Formation aus Löchern aufweist. Die Vorrichtung ist in diesem Anwendungsbeispiel im Zentralbereich der Saugseite angeordnet. Die Vorrichtungseinhüllende lässt ersehen, dass die Meridianerstreckung der Vorrichtung in diesem Anwendungsbeispiel sowohl in Richtung des Gehäuses als auch in Richtung der Nabe kontinuierlich abnimmt.

Die Fig. 17e zeigt eine Rotor- oder Statorbaugruppe, die auf der Saugseite eine Formation aus 3 Schlitzen aufweist. Die Vorrichtung liegt in diesem Anwendungsbeispiel am Gehäuse. Die Vorrichtungseinhüllende lässt ersehen, dass die Meridianerstreckung der Vorrichtung hier in Richtung der Nabe kontinuierlich abnimmt.

Die Fig. 17f zeigt eine Rotor- oder Statorbaugruppe, die auf der Saugseite eine Formation aus 2 Flachdüsen aufweist. Die Vorrichtung liegt in diesem Anwendungsbeispiel an der Nabe. Die Vorrichtungseinhüllende lässt ersehen, dass die Meridianerstreckung der Vorrichtung hier in Richtung des Gehäuses kontinuierlich abnimmt.

Bei der erfindungsgemäßen Strömungsarbeitsmaschine wird somit ein bislang unerreichtes Maß an Grenzschichtbeeinflussung erzielt. Dies ist bei unterschiedlichen Arten von Strömungsarbeitsmaschinen wie Bläsern, Verdichtern, Pumpen und Ventilatoren oder auch Propellern und Schiffsschrauben möglich. Je nach Ausführungsvariante sind eine aerodynamische Belastung und eine Strömungsumlenkung möglich, die bis zu 50% über den nach heutigem Stand der Technik erreichten Werten liegen. Für festgeschriebene Leistungswerte einer Strömungsarbeitsmaschine lässt sich unter Beibehaltung oder einer Verbesserung des Wirkungsgrades von bis zu 1% die Anzahl der verbauten Teile um etwa 30% gegenüber einer konventionellen Bauweise senken. Die Kosten sinken um 10% bis 15%. Bei Einsatz des neuen Schaufelkonzeptes im Verdichter eines Flugtriebwerkes mit rund 25000 Pfund Schub ergibt eine Reduzierung des spezifischen Kraftstoffverbrauches von bis zu 0,5% und eine Gewichtsersparnis von rund 5%.

### Bezugszeichenliste

- 1: Gehäuse
- 2: Schaufel
- 3: Schlitz
- 4: Schlitz
- 5: Stator
- 6: Rotor
- 7: Stator
- 8: Rotorschaufel
- 9: Statorschaufel
- 10: Ringkanal
- 11: Rotortrommel (Nabe)
- 12: Drosselorgan
- 13: Maschinenachse

## Patentansprüche

1. Strömungsarbeitsmaschine mit zumindest einem Rotor (6), der mehrere an einer rotierenden Welle befestigte Rotorschaufeln (8) umfasst, sowie mit einem einen Ringkanal bildenden Gehäuse (1), welches unter Durchströmung des Rotors (6) und/oder eines Stators (9) von einem Fluid durchströmt wird,
wobei Mittel zur Zufuhr von Fluid an mindestens einer Schaufel (8) einer Schaufelreihe des Rotors (6) und/oder des Stators (9) an aerodynamisch kritischen Orten auf der Saugseite vorgesehen sind,
wobei sich die Anordnung der Mittel zur Fluidzufuhr an Meridianstromlinien orientiert, die aus einer zwischen der Nabe und dem Gehäuse äquidistanten Teilung der Ringkanalmittelorthogonalen hervorgehen,
wobei jede Ringkanalmittelorthogonale durch eine Senkrechte auf der mittleren Meridianstromlinie des Ringkanals gegeben ist, wobei zur gezielten Beeinflussung der dreidimensionalen Strömung die Mittel zur Fluidzufuhr nicht punktuell, sondern entlang einer Meridianstromlinie in einem Bereich S verteilt angelegt sind,
wobei der Bereich S auf einer Meridianstromlinie ein Maximum Sx annimmt,
wobei der Bereich S in meridianstromlinienorthogonaler Richtung zu wenigstens einer der Ringkanalwände (Nabe 11 oder Gehäuse 1) hin stufenweise oder kontinuierlich abnimmt und eine variable Intensität der Fluidzufuhr entlang der Schaufelhöhe zwischen Nabe und Gehäuse ermöglicht ist.

2. Strömungsarbeitsmaschine nach Anspruch 1, **dadurch gekennzeichnet, dass**
das zugeführte Fluid durch mindestens zwei Austrittsöffnungen in den Hauptströmungspfad gelangt, wobei die mindestens zwei Austrittsöffnungen in Form von zumindest einem Schlitz,
zumindest einer Reihe von lochartigen Ausnehmungen,
zumindest einer Flachdüse,
zumindest einem Schlitz in Profiltiefenrichtung,
einer Formation aus geraden oder gekrümmten Schlitzen oder einer Formation aus mehreren Löchern ausgebildet ist.

3. Strömungsarbeitsmaschine nach einem der Ansprüche 1 oder 2, **dadurch gekennzeichnet, dass** die Mittel zur Fluidzufuhr durch mehrere unterschiedliche Schaufelinnenkammern versorgt werden.
